(19) **Europäisches Patentamt / European Patent Office / Office européen des brevets**

(11) **EP 4 485 571 A1**

(12) **EUROPEAN PATENT APPLICATION**

(43) Date of publication:
01.01.2025 Bulletin 2025/01

(21) Application number: 24182450.7

(22) Date of filing: 16.06.2024

(51) International Patent Classification (IPC):
$H01M\ 4/36^{(2006.01)}$    $H01M\ 4/38^{(2006.01)}$
$H01M\ 4/485^{(2010.01)}$    $H01M\ 4/505^{(2010.01)}$
$H01M\ 4/525^{(2010.01)}$    $H01M\ 4/58^{(2010.01)}$
$H01M\ 4/583^{(2010.01)}$    $H01M\ 4/587^{(2010.01)}$
$H01M\ 10/0525^{(2010.01)}$    $H01M\ 4/02^{(2006.01)}$

(52) Cooperative Patent Classification (CPC):
H01M 4/587; H01M 4/364; H01M 4/386;
H01M 4/485; H01M 4/505; H01M 4/525;
H01M 4/5825; H01M 4/583; H01M 10/0525;
H01M 2004/021; H01M 2004/027; H01M 2004/028

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 27.06.2023 KR 20230082901

(71) Applicant: SK On Co., Ltd.
Seoul 03161 (KR)

(72) Inventors:
• **PARK, Jae Hui**
**34124 Daejeon (KR)**
• **SEO, Jeong Min**
**34124 Daejeon (KR)**

(74) Representative: **Stolmár & Partner Patentanwälte PartG mbB Blumenstraße 17 80331 München (DE)**

(54) **LITHIUM SECONDARY BATTERY**

(57) A lithium secondary battery includes a positive electrode including a first positive electrode active material and a second positive electrode active material and a negative electrode including a first negative electrode active material and a second negative electrode active material. The first positive electrode active material may have a higher specific capacity value than the second positive electrode active material, the first negative electrode active material may have a higher specific capacity value than the second negative electrode active material, and the lithium secondary battery may have an R value of 0.1 to 35 according to Equation 1 below.

[Equation 1]

$$R = X/Y$$

In Equation 1, X is a content ratio of a positive electrode active material and Y is a content ratio of a negative electrode active material.

**EP 4 485 571 A1**

**Description**

**BACKGROUND**

**1. FIELD**

The present disclosure relates to a lithium secondary battery.

**2. DESCRIPTION OF RELATED ART**

Recently, research has been actively conducted into eco-friendly means of transportation, such as electric vehicles (EVs) that may replace fossil fuel-based vehicles, which are one of the main causes of air pollution, and lithium secondary batteries having a high discharge voltage and output stability have been mainly used as a power source for these eco-friendly means of transportation.

Generally, lithium secondary batteries include a positive electrode and a negative electrode, and the capacity, energy density, stability, lifespan characteristics, etc. of finally manufactured secondary batteries may vary depending on the type and content of the active materials included in the positive electrode and negative electrode. For example, the energy density and stability of active materials may have a trade-off relationship, and the capacity and degree of deterioration of the finally manufactured electrodes may be different depending on the types of used active materials.

Accordingly, there is a need for the development of a lithium secondary battery having excellent performance by improving all of the characteristics described above.

**SUMMARY**

An aspect of the present disclosure is to effectively suppress a difference in the degree of deterioration of a positive electrode and a negative electrode.

Another aspect of the present disclosure is to maintain a balanced utilization capacity ratio of a positive electrode and a negative electrode in a lithium secondary battery.

Another aspect of the present disclosure is to provide a high energy density lithium secondary battery having excellent lifespan characteristics.

According to another aspect of the present disclosure, a lithium secondary battery includes: a positive electrode including a first positive electrode active material and a second positive electrode active material; and a negative electrode including a first negative electrode active material and a second negative electrode active material. The first positive electrode active material may have a higher specific capacity value than the second positive electrode active material, the first negative electrode active material may have a higher specific capacity value than the second negative electrode active material, and the lithium secondary battery may have an R value of 0.1 to 35 according to Equation 1 below.

$$[\text{Equation 1}]$$

$$R = X/Y$$

In Equation 1, X is a content ratio of a positive electrode active material according to Equation 2 below, and Y is a content ratio of a negative electrode active material according to Equation 3 below.

$$[\text{Equation 2}]$$

$$X = C_{X1} / C_{X2}$$

In Equation 2, $C_{X1}$ is a weight ratio of the first positive electrode active material to a total weight of the first positive electrode active material and the second positive electrode active material, and $C_{X2}$ is a weight ratio of the second positive electrode active material to the total weight of the first positive electrode active material and the second positive electrode active material.

$$[\text{Equation 3}]$$

$$Y = C_{Y1}/C_{Y2}$$

In Equation 3, $C_{Y1}$ is a weight ratio of the first negative electrode active material to a total weight of the first negative electrode active material and the second negative electrode active material, and $C_{Y2}$ is a weight ratio of the second negative electrode active material to the total weight of the first negative electrode active material and the second negative electrode active material.

The first negative electrode active material may include at least one of natural graphite, silicon-based active material, and metal-based active material.

The second negative electrode active material may include at least one of artificial graphite and low crystalline carbon-based active material.

The first negative electrode active material may include a silicon-based active material.

The second negative electrode active material may include artificial graphite.

The R value may be 0.62 to 33.

According to another aspect of the present disclosure, a lithium secondary battery includes: a positive electrode including a first positive electrode active material and a second positive electrode active material; and a negative electrode including a first negative electrode active material and a second negative electrode active material. The first positive electrode active material may have a higher specific capacity value than the second positive electrode active material, the first negative electrode active material may include natural graphite, the second negative electrode active material may include artificial graphite, and the lithium secondary battery may have an R value of 0.1 to 35 according to Equation 1 above.

The R value may be 0.25 to 9,

The R value may be 0.8 to 1.2,

The X and Y values in Equation 1 may each be 0.1 to 9.

The X value in Equation 1 may be 0.3 to 1, and the Y value in Equation 1 may be 0.1 to 2.

The first positive electrode active material may include at least one of a layered active material and a spinel-type active material.

The second positive electrode active material may include an olivine-type active material.

The first positive electrode active material may be represented by Chemical Formula 1 below:

$$[\text{Chemical Formula 1}] \qquad Li_zNi_aCo_bMn_cO_2$$

In Chemical Formula 1, $0.5 \leq a \leq 0.98$, $0 \leq b \leq 0.5$, $0 \leq c \leq 0.5$, and $1 \leq z \leq 1.5$.

The second positive electrode active material may be represented by Chemical Formula 2 below

$$[\text{Chemical Formula 2}] \qquad LiMePO_4$$

In Chemical Formula 2, Me is one or more elements selected from Co, Ni, Fe, and Mn.

**DETAILED DESCRIPTION**

Hereinafter, exemplary embodiments of the present disclosure are described in detail. However, the exemplary embodiments of the present disclosure may be modified into various other forms and the scope is not limited to the exemplary embodiments described below. In addition, the exemplary embodiments of the present disclosure may be applied limitedly to the configurations of the exemplary embodiments described below and all or part of exemplary embodiments may be selectively combined so that various modifications may be made.

**Lithium secondary battery**

A lithium secondary battery according to an exemplary embodiment includes a positive electrode including a first positive electrode active material and a second positive electrode active material; and a negative electrode including a first negative electrode active material and a second negative electrode active material. The first positive electrode active material has a higher specific capacity value than the second positive electrode active material, the first negative electrode active material has a higher specific capacity value than the second negative electrode active material, and the lithium secondary battery has an R value of 0.1 to 35 according to Equation 1 below.

$$[\text{Equation 1}]$$

$$R = X/Y$$

In Equation 1, X is a content ratio of a positive electrode active material according to Equation 2 below, and Y is a content ratio of a negative electrode active material according to Equation 3 below.

[Equation 2]

$$X = C_{X1} / C_{X2}$$

In Equation 2, $C_{X1}$ is a weight ratio of the first positive electrode active material to a total weight of the first positive electrode active material and the second positive electrode active material, and $C_{X2}$ is a weight ratio of the second positive electrode active material to the total weight of the first positive electrode active material and the second positive electrode active material.

[Equation 3]

$$Y = C_{Y1} / C_{Y2}$$

In Equation 3, $C_{Y1}$ is a weight ratio of the first negative electrode active material to a total weight of the first negative electrode active material and the second negative electrode active material, and $C_{Y2}$ is a weight ratio of the second negative electrode active material to the total weight of the first negative electrode active material and the second negative electrode active material.

As described above, the energy density and stability of active materials may have a trade-off relationship, and the capacity and degree of deterioration of finally manufactured electrodes may be different depending on the types of used active materials. For example, an active material having a layered structure or spinel structure, such as a nickel-cobalt-manganese (NCM)-based positive electrode active material, has a relatively high specific capacity value compared to an active material having an olivine structure, such as a lithium iron phosphate (LFP)-based positive electrode active material, but is insufficient in structural stability, so structural deterioration thereof may progress relatively more quickly during battery use.

In this regard, when active materials are mixed (blended) to be used so that a positive electrode may include two or more types of active materials having different characteristics, differences in the degree of deterioration of the positive electrode may occur depending on a mixture ratio of the active materials. In addition, when a secondary battery is manufactured using a negative electrode that is not suitable for the active material mixture ratio and degree of deterioration of the positive electrode including mixed active materials, differences in the degree of deterioration of the positive and negative electrodes may occur in the secondary battery, resulting in that a utilization capacity ratio is not maintained in balance, which may deteriorate the lifespan characteristics and long-term performance of the secondary battery.

The lithium secondary battery according to the exemplary embodiment described above, the negative electrode also includes a mixture of active materials having different specific capacity values in consideration of the active material mixture ratio and degree of deterioration of the positive electrode including a mixture of active materials having different specific capacity values. Specifically, the positive electrode includes a first positive electrode active material having a relatively high specific capacity value; and a second positive electrode active material having a relatively low specific capacity, wherein the negative electrode includes a first negative electrode active material having a relatively high specific capacity and a second negative electrode active material having a relatively low specific capacity value.

Accordingly, the lithium secondary battery may include the negative electrode suitable for the active material mixture ratio and degree of deterioration of the positive electrode including mixed active materials, thereby effectively alleviating imbalances in the degree of deterioration and utilization capacity ratio of both electrodes, and therefore, both the lifespan characteristics and energy density of the secondary battery may become excellent.

The first negative electrode active material may include at least one of natural graphite, a silicon-based active material, and a metal-based active material, and the second negative electrode active material may include at least one of artificial graphite and a low-crystalline carbon-based active material. At this time, when the first negative electrode active material includes natural graphite and the second negative electrode active material includes artificial graphite, the natural graphite may be natural graphite having a higher specific capacity value than artificial graphite.

The silicon-based active material is not particularly limited as long as it is an active material having a high specific capacity value compared to the second negative electrode active material. As an example, the silicon-based active material may be at least one selected from silicon (Si), silicon oxide ($SiO_x$; $0<x\leq2$), metal-doped or carbon-coated silicon oxide, and silicon-carbon composite (Si-C).

The metal-based active material is not particularly limited as long as it is an active material having a specific capacity value greater than that of the second negative electrode active material. As an example, the metal-based active material may be at least one selected from tin (Sn), tin oxide ($SnO_x$; $0<x\leq2$), and lithium metal (Li-metal).

The low-crystalline carbon-based active material is not limited as long as it is an active material having a low specific capacity value compared to the first negative electrode active material. As an example, the low-crystalline carbon-based active material may be at least one selected from soft carbon and hard carbon.

In the lithium secondary battery, the first negative electrode active material may include a silicon-based active material, and the second negative electrode active material may include artificial graphite. In this case, the content of the silicon-based active material among the active materials included in the negative electrode of the lithium secondary battery may be 3 to 15 wt%, and the content of artificial graphite may be 85 to 97 wt%. Also, in this case, the R value may be 0.62 to 33.

A lithium secondary battery according to another exemplary embodiment of the present disclosure includes: a positive electrode including a first positive electrode active material and a second positive electrode active material; and a negative electrode including a first negative electrode active material and a second negative electrode active material. The first positive electrode active material may have a higher specific capacity value than the second positive electrode active material, the first negative electrode active material may include natural graphite, the second negative electrode active material may include artificial graphite, and the lithium secondary battery may have an R value of 0.1 to 35 according to Equation 1 above.

In the lithium secondary battery according to an exemplary embodiment described above, the negative electrode includes a mixture of natural graphite and artificial graphite in consideration of the active material mixture ratio and degree of deterioration of the positive electrode including active materials having different specific capacity values. Specifically, in the lithium secondary battery according to the above exemplary embodiment, the first negative electrode active material includes natural graphite, and the second negative electrode active material includes artificial graphite. At this time, the specific capacity values of the natural graphite and artificial graphite may be the same or different. That is, the natural graphite may be natural graphite having a specific capacity value greater than or equal to that of artificial graphite or may be natural graphite having a relatively low specific capacity value.

Hereinafter, the R value according to Equation 1 is described in detail.

The R value is a ratio between the content ratio X of the positive electrode active material and the content ratio Y of the negative electrode active material in the lithium secondary battery including positive and negative electrodes including a mixture of active materials having different characteristics and may be value obtained by dividing the content ratio X of the positive electrode active material by the content ratio Y of the negative electrode active material.

The content ratio X of the positive electrode active material is a ratio between the weight ratio $C_{X1}$ of the first positive electrode active material and the weight ratio $C_{X2}$ of the second positive electrode active material to the total weight of the first positive electrode active material and the second positive electrode active material, and may refer to a value obtained by dividing the weight ratio $C_{X1}$ of the first positive electrode active material divided by the weight ratio $C_{X2}$ of the second positive electrode active material.

The content ratio Y of the negative electrode active material is a ratio between the weight ratio $C_{Y1}$ of the first negative electrode active material and the weight ratio $C_{Y2}$ of the second negative electrode active material to the total weight of the first negative electrode active material and the second negative electrode active material, and may refer to a value obtained by dividing the weight ratio $C_{Y1}$ of the negative electrode active material divided by the weight ratio $C_{Y2}$ of the second negative electrode active material.

The R value of the lithium secondary battery according to the exemplary embodiments described above is 0.1 to 35, specifically, 0.1 or more, 0.2 or more, 0.25 or more, 0.4 or more, or 0.62 or more, and 33 or less, 11 or less, 10 or less, 9 or less, or 4 or less. The R value of the lithium secondary battery according to an exemplary embodiment may be 0.1 to 11, 0.2 to 10, 0.25 to 9, or 0.4 to 4. The R value of the lithium secondary battery according to another exemplary embodiment may be 0.62 to 33.

The lithium secondary battery according to the exemplary embodiments described above may include a positive electrode and a negative electrode applied by mixing active materials having different characteristics, and the ratio between the content ratio X of the positive electrode active material and the content ratio Y of the negative electrode active material may be substantially the same. That is, in the lithium secondary battery according to the exemplary embodiments described above, the R value may be 0.8 to 1.2. Specifically, in the lithium secondary battery according to the exemplary embodiments described above, the R value may be 0.9 to 1.1, and may be substantially 1.0. In the lithium secondary battery, when the ratio between the content ratio X of the positive electrode active material and the content ratio Y of the negative electrode active material is substantially the same, differences in the degree of deterioration of the positive electrode and negative electrode may be effectively alleviated and the utilization capacity ratio of the positive electrode and the negative electrode may be maintained in a more balanced manner, thereby significantly improving the lifespan characteristics and long-term performance of the secondary battery.

In the lithium secondary battery according to the exemplary embodiments described above, the weight ratio $C_{X1}$ of the first positive electrode active material and the weight ratio $C_{X2}$ of the second positive electrode active material to the total weight of the first and second positive electrode active materials may each be 0.1 to 0.9. In addition, the weight ratio $C_{Y1}$ of the first negative electrode active material and the weight ratio $C_{Y2}$ of the second negative electrode active material to the total weight of the first and second negative electrode active materials may each be 0.1 to 0.9.

Specifically, the weight ratio $C_{X1}$ of the first positive electrode active material to the total weight of the first positive electrode active material and the second positive electrode active material may be 0.1 to 0.5, and the weight ratio $C_{X2}$ of the second positive electrode active material may be 0.5 to 0.9. In addition, the weight ratio $C_{Y1}$ of the first negative electrode active material to the total weight of the first negative electrode active material and the second negative electrode active material may be 0.1 to 0.5, and the weight ratio $C_{Y2}$ of the second negative electrode active material may be 0.5 to 0.9.

In the lithium secondary battery according to the exemplary embodiments described above, the X value and Y value of Equation 1 may each be 0.1 to 9. Specifically, the X value and Y value of Equation 1 may each be 0.1 to 1.5, 0.1 to 1, 0.2 to 1, 0.3 to 0.7, or 0.3 to 0.5. Specifically, the X value in Equation 1 may be 0.3 to 1, and the Y value in Equation 1 may be 0.1 to 2. More specifically, the X value in Equation 1 may be 0.3 to 0.7, and the Y value in Equation 1 may be 0.1 to 1.

When the contents of the first positive electrode active material, second positive electrode active material, first negative electrode active material, and second negative electrode active material in the lithium secondary battery are adjusted as described above, the deterioration of the electrode may be alleviated due to excellent stability, thereby providing the lithium secondary battery having excellent energy density, while having improved lifespan characteristics.

In the lithium secondary battery according to the exemplary embodiments described above, the first positive electrode active material may include at least one of a layered active material and a spinel-type active material, and the second positive electrode active material may include an olivine-type active material. The first positive electrode active material may include, for example, a lithium-transition metal oxide, such as lithium cobalt oxide ($LiCoO_2$), lithium manganese oxide ($LiMn_2O_4$), or lithium nickel oxide ($LiNiO_2$), or a lithium-transition metal complex oxide in which a portion of these transition metals is substituted with another transition metal. In addition, the first positive electrode active material may include, for example, an NCM-based positive electrode active material or an LLO (Li rich layered oxides, over-lithiated oxides, over-lithiated layered oxide, OLO, LLOs)-based positive electrode active material.

In the lithium secondary battery according to the exemplary embodiments described above, the first positive electrode active material may be represented by Chemical Formula 1 below, and the second positive electrode active material may be represented by Chemical Formula 2 below.

$$[\text{Chemical Formula 1}] \qquad Li_zNi_aCo_bMn_cO_2$$

In Chemical Formula 1, $0.5 \leq a \leq 0.98$, $0 \leq b \leq 0.5$, $0 \leq c \leq 0.5$, and $1 \leq z \leq 1.5$.

$$[\text{Chemical Formula 2}] \qquad LiMePO_4$$

In Chemical Formula 2, Me is one or more elements selected from Co, Ni, Fe, and Mn.

As an example, the second positive electrode active material may be a lithium iron phosphate (LFP)-based positive electrode active material represented by a chemical formula of $LiFePO_4$.

In the lithium secondary battery according to the exemplary embodiments described above, when the positive electrode and the negative electrode each include three or more types of active materials having different characteristics, two types of active materials selected from among the three or more types of active materials may satisfy the characteristics described above. That is, in the lithium secondary battery according to the exemplary embodiments described above, when the positive electrode includes three or more types of active materials, two types of active materials selected arbitrarily from the three or more types of active materials may satisfy the characteristics of the first positive electrode active material and the second positive electrode active material described above, respectively, and when the negative electrode includes three or more types of active materials, two types of active materials selected arbitrarily from the three or more types of active materials may satisfy the characteristics of the first negative electrode active material and the second negative electrode active material described above, respectively.

For example, when the positive electrode includes three or more types of active materials having different characteristics, an active material having the first and second largest specific capacity values may satisfy the characteristics of the first and second positive electrode active materials described above, respectively. In addition, when the negative electrode includes three or more types of active materials having different characteristics, the active material having the first and second largest specific capacity values may satisfy the characteristics of the first and second negative electrode active materials described above, respectively.

In the lithium secondary battery according to the exemplary embodiments described above, the positive electrode and the negative electrode may each include a current collector and a mixture layer formed on at least one surface of the current collector.

The type and thickness of the positive electrode current collector and the negative electrode current collector are not particularly limited. For example, aluminum foil (Al-foil) may be used as the positive electrode current collector, and copper foil (Cu-foil) may be applied as the negative electrode current collector. In addition, as an example, the thickness of the positive electrode current collector and the negative electrode current collector may each be 10 μm to 50 μm.

The positive electrode mixture layer and the negative electrode mixture layer may be active layers including an active material that substantially participates in an electrochemical reaction of the secondary battery, and the positive electrode mixture layer may include the first and second positive electrode active materials described above, and the negative electrode mixture layer may include the first negative electrode active material and the second negative electrode active material described above.

Each of the positive electrode mixture layer and the negative electrode mixture layer may further include a conductive material. The conductive material may not be particularly limited and may include, for example, graphite, such as natural graphite or artificial graphite; carbon-based materials, such as carbon black, acetylene black, Ketjen black, channel black, furnace black, lamp black, summer black, carbon fiber, and carbon nanotubes (CNT); metal powder or metal fiber, such as copper, nickel, aluminum, and silver; conductive whiskers, such as zinc oxide and potassium titanate; conductive metal oxides, such as titanium oxide; and conductive polymers, such as polyphenylene derivatives. When the positive electrode mixture layer further includes a conductive material, the content may be, for example, 0.1 wt% to 5 wt% based on the total weight of the positive electrode mixture layer. In addition, when the negative electrode mixture layer further includes a conductive material, the content may be, for example, 0.1 wt% to 5 wt% based on the total weight of the negative electrode mixture layer.

The positive electrode mixture layer and the negative electrode mixture layer may each further include a binder. The binder is not particularly limited. The binder included in the positive electrode mixture layer may be, for example, at least one selected from polyvinylidene fluoride (PVDF), polyvinyl alcohol (PVA), polyvinylpyrrolidone (PVP), carboxymethylcellulose (CMC), ethylcellulose, acrylic resin, styrene-butadiene rubber (SBR), and polytetrafluoroethylene (PTFE). In addition, the binder included in the negative electrode mixture layer may be, for example, at least one selected from a rubber-based binder, such as styrene-butadiene rubber (SBR), fluorine-based rubber, ethylene propylene rubber, butyl acrylate rubber, butadiene rubber, isoprene rubber, acrylonitrile rubber, acrylic rubber, and silane-based rubber; a cellulose-based binder, such as carboxymethylcellulose (CMC), hydroxypropylmethylcellulose, and methylcellulose, or an alkali metal salt (Na, K, or Li) thereof. When the positive electrode mixture layer further includes a binder, the content may be 0.1 wt% to 5 wt% based on the total weight of the positive electrode mixture layer, as an example. In addition, when the negative electrode mixture layer further includes a binder, the content may be 0.1 to 5 wt% based on the total weight of the negative electrode mixture layer.

The lithium secondary battery according to the exemplary embodiments described above may not include a separator between the positive electrode and the negative electrode or may further include a separator. When the lithium secondary battery further includes a separator, the separator may be a polyolefin-based polymer separator, such as polyethylene or polypropylene, glass fiber, polyester, polytetrafluoroethylene, or a combination thereof, and may be in the form of non-woven fabric or woven fabric. In addition, the separator may be coated with a composition including a ceramic component to ensure heat resistance or mechanical strength and may selectively have a single-layer or multi-layer structure. A separator having the compounds, structures, etc. described above may be applied as the separator, but is not limited thereto.

The lithium secondary battery according to the exemplary embodiments described above may further include a solid electrolyte. That is, the lithium secondary battery may include a solid electrolyte without including a separator between the positive and negative electrodes. The solid electrolyte is not particularly limited and may be, for example, an oxide-based solid electrolyte, a sulfide-based solid electrolyte, or a polymer-based solid electrolyte.

Hereinafter, a method of manufacturing a lithium secondary battery according to the exemplary embodiments described above will be described in detail.

The method of manufacturing a lithium secondary battery according to the exemplary embodiments described above is not particularly limited. As an example, in the case of a positive electrode, a positive electrode slurry including the first positive electrode active material and the second positive electrode active material described above may be applied to the positive electrode current collector by a method, such as bar coating, casting, or spraying, and dried at a temperature of 100°C to 140°C to form the positive electrode in which a positive electrode mixture layer is formed on a surface of the positive electrode current collector.

In addition, in the case of a negative electrode, a negative electrode slurry including the first negative electrode active material and a second negative electrode active material described above may be applied to the negative electrode current collector by a method, such as bar coating, casting, or spraying, and dried at 80°C to 120°C to form the negative electrode in which a negative electrode mixture layer is formed on a surface of the negative electrode current collector.

The positive electrode slurry and negative electrode slurry may each further include a solvent. As the solvent, for example, dimethyl sulfoxide (DMSO), isopropyl alcohol, N-methylpyrrolidone (NMP), acetone, or water may be used. At this time, the usage amount of the solvent is not particularly limited as long as it dissolves or disperses the components in consideration of an application thickness of the slurry, manufacturing yield, etc. and has a viscosity that may exhibit excellent thickness uniformity when applied to the current collector.

When the lithium secondary battery according to the exemplary embodiments described above does not further include a solid electrolyte, the lithium secondary battery may be manufactured by inserting a secondary battery cell including the positive and negative electrodes described above into a battery case and then injecting an electrolyte solution.

The battery case may be one generally used in the art. As an example, the battery case may be a cylindrical, prismatic, pouch-type, or coin-type battery case, and specifically, may be a pouch-type battery case. In addition, the battery case may have a structure in which an insulating layer, an adhesive layer, a metal thin film, etc. are stacked. The metal thin film may include aluminum (Al) or the like to secure the mechanical strength of the case and block moisture and oxygen.

The electrolyte solution may include an organic solvent and a lithium salt. The organic solvent serves as a medium through which ions involved in an electrochemical reaction of the battery may move. For example, carbonate-based, ester-based, ether-based, ketone-based, alcohol-based or aprotic solvents may be used alone or two or more types thereof may be mixed to be used. When two or more types are mixed, a mixture ratio may be appropriately adjusted depending on desired battery performance. The lithium salt is dissolved in an organic solvent and acts as a source of lithium ions in the battery and is a substance that enables a basic operation of the lithium secondary battery and promotes the movement of lithium ions between the positive electrode and the negative electrode. As the lithium salt, known substances may be used at a concentration suitable for the purpose. According to an exemplary embodiment, the electrolyte solution may further include a known solvent to improve charge/discharge characteristics, flame retardancy characteristics, etc., and may include known additives.

Example

<Manufacturing secondary battery>

1. Examples 1 to 3

95 wt% of a mixed positive electrode active material including NCM-based positive electrode active material ($Li(Ni_{0.5}Co_{0.2}Mn_{0.3})O_2$) and LFP-based positive electrode active material ($LiFePO_4$) as the first and second positive electrode active materials, respectively, and 2 wt% of a conductive material (carbon black), a 3 wt% of a binder (polyvinylidene fluoride; PVDF) were added to N-methylpyrrolidone (NMP) solvent to prepare a slurry, the slurry was applied at 16 mg/cm$^2$ on an aluminum foil (Al-foil) having a thickness of 20 $\mu$m and then dried at 135°C to manufacture a positive electrode. In addition, 95 wt% of a mixed negative electrode active material including natural graphite and artificial graphite respectively as the first and second negative electrode active materials, 2 wt% of a conductive material (carbon black), a 3 wt% of a binder (carboxymethylcellulose (CMC)) were added to distilled water to prepare a slurry, the slurry was applied at 8 mg/cm$^2$ to a copper foil (Cu-foil) having a thickness of 10 $\mu$m and then dried at 115°C to manufacture a negative electrode. Thereafter, secondary battery cells of Examples 1 to 3 were manufactured by interposing a polyolefin separator between the positive electrode and the negative electrode.

At this time, the mixed positive electrode active material and the mixed negative active material were mixed at the weight ratio shown in Table 1 below, and the X, Y, and R values according to Equations 1 to 3 below were calculated.

$$[\text{Equation 1}]$$

$$R = X/Y$$

In Equation 1, X is a content ratio of a positive electrode active material according to Equation 2 below, and Y is a content ratio of a negative electrode active material according to Equation 3 below.

$$[\text{Equation 2}]$$

$$X = C_{X1} / C_{X2}$$

In Equation 2, $C_{X1}$ is a weight ratio of the first positive electrode active material to a total weight of the first positive electrode active material and the second positive electrode active material, and $C_{X2}$ is a weight ratio of the second positive electrode active material to the total weight of the first positive electrode active material and the second positive electrode active material.

$$[\text{Equation 3}]$$

$$Y = C_{Y1}/C_{Y2}$$

In Equation 3, $C_{Y1}$ is a weight ratio of the first negative electrode active material to a total weight of the first negative electrode active material and the second negative electrode active material, and $C_{Y2}$ is a weight ratio of the second negative electrode active material to the total weight of the first negative electrode active material and the second negative electrode active material.

2. Comparative Examples 1 and 2

As shown in Table 1 below, secondary battery cells of Comparative Examples 1 and 2 were manufactured in the same manner as Examples 1 to 3, except that only natural graphite or artificial graphite was included as the negative electrode active material.

<Evaluation of secondary battery - capacity retention rate>

After introducing the secondary battery cell manufactured as described above into a pouch for secondary batteries, an electrolyte solution including 1M of $LiPF_6$ dissolved therein was injected into a solvent in which ethylene carbonate (EC) and diethyl carbonate (DEC) were mixed, which was then sealed to manufacture a pouch-type lithium secondary battery. The manufactured pouch-type lithium secondary battery was applied as a secondary battery sample for Examples and Comparative Examples.

For the secondary battery manufactured as described above, capacity retention rate evaluation in the range of DOD 100 (SOC 0 to 100) was performed in a chamber maintained at 25°C. The secondary battery was charged at 0.3C to the voltage corresponding to SOC 100 under constant current/constant voltage (CC/CV) conditions, cut off at 0.05C, and then discharged at 0.3C to the voltage corresponding to SOC 0 under constant current (CC) conditions, and a discharge capacity was measured. After repeating this for 500 cycles, a discharge capacity retention rate was measured in % compared to an initial discharge capacity according to Equation 4 below, and the results are shown in Table 1 below.

Capacity retention rate (%) = (discharge capacity at 500 cycles /(discharge capacity at 1 cycle) $\times$ 100      [equation 4]

[Table 1]

| | Positive electrode active material | | X | Negative electrode active material | | Y | R | Capacity retention rate(%) |
|---|---|---|---|---|---|---|---|---|
| | NCM | LFP | | Natural graphite | Artificial graphite | | | |
| Example 1 | 40 | 60 | 0.67 | 40 | 60 | 0.67 | 1.00 | 97.8 |
| Example 2 | 30 | 70 | 0.43 | 50 | 50 | 1.00 | 0.43 | 96.5 |
| Example 3 | 30 | 70 | 0.43 | 10 | 90 | 0.11 | 3.86 | 96.7 |
| Comparative Example 1 | 30 | 70 | 0.43 | 100 | 0 | - | - | 89.7 |
| Comparative Example 2 | 40 | 60 | 0.67 | 0 | 100 | - | - | 95.2 |

Referring to Table 1, as the lithium secondary batteries using a positive electrode including a mixture of active materials having different properties, the secondary batteries according to Examples 1 to 3 using a negative electrode including a mixture of active materials with different characteristics are shown to have excellent lifespan characteristics due to the relatively high capacity retention rate.

Therefore, it is determined that, when each of the positive and negative electrodes includes a mixture of active materials having different characteristics and the R value according to Equation 1 is 0.1 to 35 through adjustment of the content ratio considering the characteristics of each active material, the lifespan characteristics of the secondary battery may be improved to an excellent level.

According to an exemplary embodiment in the present disclosure, imbalance in the degree of deterioration of the positive electrode and the negative electrode may be effectively alleviated.

According to another exemplary embodiment in the present disclosure, the utilization capacity ratio of the positive electrode and the negative electrode may be maintained in a balanced manner.

According to another exemplary embodiment in the present disclosure, the high energy density lithium secondary battery having excellent lifespan characteristics may be provided.

While exemplary embodiments have been shown and described above, it will be apparent to those skilled in the art that modifications and variations could be made without departing from the scope of the present disclosure as defined by the appended claims.

**Claims**

1. A lithium secondary battery comprising:

    a positive electrode including a first positive electrode active material and a second positive electrode active material; and
    a negative electrode including a first negative electrode active material and a second negative electrode active material,
    wherein the first positive electrode active material has a higher specific capacity value than the second positive electrode active material,
    the first negative electrode active material has a higher specific capacity value than the second negative electrode active material, and
    the lithium secondary battery has an R value of 0.1 to 35 according to Equation 1 below,

    $$[\text{Equation 1}]$$

    $$R = X/Y$$

    wherein X is a content ratio of a positive electrode active material according to Equation 2 below, and Y is a content ratio of a negative electrode active material according to Equation 3 below.

    $$[\text{Equation 2}]$$

    $$X = C_{X1} / C_{X2}$$

    wherein $C_{X1}$ is a weight ratio of the first positive electrode active material to a total weight of the first positive electrode active material and the second positive electrode active material, and $C_{X2}$ is a weight ratio of the second positive electrode active material to the total weight of the first positive electrode active material and the second positive electrode active material.

    $$[\text{Equation 3}]$$

    $$Y = C_{Y1}/C_{Y2}$$

    wherein $C_{Y1}$ is a weight ratio of the first negative electrode active material to a total weight of the first negative electrode active material and the second negative electrode active material, and $C_{Y2}$ is a weight ratio of the second negative electrode active material to the total weight of the first negative electrode active material and the second negative electrode active material.

2. The lithium secondary battery of claim 1, wherein

    the first negative electrode active material includes at least one of natural graphite, silicon-based active material, and metal-based active material, and
    the second negative electrode active material includes at least one of artificial graphite and low crystalline carbon-based active material.

3. The lithium secondary battery of claim 1 or 2, wherein

    the first negative electrode active material includes a silicon-based active material, and
    the second negative electrode active material includes artificial graphite.

4. The lithium secondary battery of claim 3, wherein the R value is 0.62 to 33.

**5.** A lithium secondary battery comprising:

a positive electrode including a first positive electrode active material and a second positive electrode active material; and
a negative electrode including a first negative electrode active material and a second negative electrode active material,
wherein the first positive electrode active material has a higher specific capacity value than the second positive electrode active material,
the first negative electrode active material includes natural graphite,
the second negative electrode active material includes artificial graphite, and
the lithium secondary battery has an R value of 0.1 to 35 according to Equation 1 below:

$$[\text{Equation 1}]$$

$$R = X/Y$$

wherein X is a content ratio of a positive electrode active material according to Equation 2 below, and Y is a content ratio of a negative electrode active material according to Equation 3 below.

$$[\text{Equation 2}]$$

$$X = C_{X1} / C_{X2}$$

wherein $C_{X1}$ is a weight ratio of the first positive electrode active material to a total weight of the first positive electrode active material and the second positive electrode active material, and $C_{X2}$ is a weight ratio of the second positive electrode active material to the total weight of the first positive electrode active material and the second positive electrode active material.

$$[\text{Equation 3}]$$

$$Y = C_{Y1} / C_{Y2}$$

wherein $C_{Y1}$ is a weight ratio of the first negative electrode active material to a total weight of the first negative electrode active material and the second negative electrode active material, and $C_{Y2}$ is a weight ratio of the second positive electrode active material to the total weight of the first negative electrode active material and the second negative electrode active material.

**6.** The lithium secondary battery of claim 5, wherein the R value is 0.25 to 9.

**7.** The lithium secondary battery of any one of claims 1 to 6, wherein the R value is 0.8 to 1.2.

**8.** The lithium secondary battery of any one of claims 1 to 7, wherein the X and Y values in Equation 1 are each 0.1 to 9.

**9.** The lithium secondary battery of any one of claims 1 to 8, wherein the X value in Equation 1 is 0.3 to 1, and the Y value in Equation 1 is 0.1 to 2.

**10.** The lithium secondary battery of any one of claims 1 to 9, wherein

the first positive electrode active material includes at least one of a layered active material and a spinel-type active material, and
the second positive electrode active material includes an olivine-type active material.

**11.** The lithium secondary battery of any one of claims 1 to 10, wherein
the first positive electrode active material is represented by Chemical Formula 1 below, and the second positive electrode active material is represented by Chemical Formula 2 below:

[Chemical Formula 1] $Li_zNi_aCo_bMn_cO_2$

wherein $0.5 \leq a \leq 0.98$, $0 \leq b \leq 0.5$, $0 \leq c \leq 0.5$, and $1 \leq z \leq 1.5$.

[Chemical Formula 2] $LiMePO_4$

wherein Me is one or more elements selected from Co, Ni, Fe, and Mn.

Europäisches
Patentamt

European
Patent Office

Office européen
des brevets

# EUROPEAN SEARCH REPORT

Application Number

EP 24 18 2450

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 869 585 A1 (LG CHEMICAL LTD [KR]) 25 August 2021 (2021-08-25) * claims 1-13 * | 1-11 | INV. H01M4/36 H01M4/38 H01M4/485 |
| X | US 2014/363736 A1 (KIM JI SUN [KR] ET AL) 11 December 2014 (2014-12-11) * claims 1-18 * | 1-11 | H01M4/505 H01M4/525 H01M4/58 H01M4/583 |
| X | US 2014/050985 A1 (LEE SOON-REWL [KR] ET AL) 20 February 2014 (2014-02-20) * claims 1-13 * | 1-11 | H01M4/587 H01M10/0525 |
| X | WO 2012/014998 A1 (HITACHI MAXELL ENERGY LTD [JP]; KAMIZORI HARUKI ET AL.) 2 February 2012 (2012-02-02) * claims 1-20 * * paragraph [0271] * * tables 1-4 * | 1-11 | ADD. H01M4/02 |
| X | KR 2014 0032834 A (LG CHEMICAL LTD [KR]) 17 March 2014 (2014-03-17) * claims 1-14 * * paragraphs [0050], [0104] - [0108] * | 1-11 | **TECHNICAL FIELDS SEARCHED (IPC)** H01M |
| Y | EP 3 859 827 A1 (CONTEMPORARY AMPEREX TECHNOLOGY CO LTD [CN]) 4 August 2021 (2021-08-04) * claims 1-12 * * paragraph [0054] * | 5,6,10, 11 | |
| Y | EP 4 075 538 A1 (CONTEMPORARY AMPEREX TECHNOLOGY CO LTD [CN]) 19 October 2022 (2022-10-19) * claims 1-16 * * paragraph [0086] * | 5,6,10, 11 | |

The present search report has been drawn up for all claims

| Place of search | Date of completion of the search | Examiner |
|---|---|---|
| Munich | 15 November 2024 | Haering, Christian |

EPO FORM 1503 03.82 (P04C01)

## ANNEX TO THE EUROPEAN SEARCH REPORT
## ON EUROPEAN PATENT APPLICATION NO.

EP 24 18 2450

This annex lists the patent family members relating to the patent documents cited in the above-mentioned European search report.
The members are as contained in the European Patent Office EDP file on
The European Patent Office is in no way liable for these particulars which are merely given for the purpose of information.

15-11-2024

| Patent document cited in search report | | Publication date | Patent family member(s) | | Publication date |
|---|---|---|---|---|---|
| EP 3869585 | A1 | 25-08-2021 | CN | 113169323 A | 23-07-2021 |
| | | | EP | 3869585 A1 | 25-08-2021 |
| | | | ES | 2938723 T3 | 14-04-2023 |
| | | | HU | E061161 T2 | 28-05-2023 |
| | | | KR | 20210055591 A | 17-05-2021 |
| | | | PL | 3869585 T3 | 17-04-2023 |
| | | | US | 2022006083 A1 | 06-01-2022 |
| US 2014363736 | A1 | 11-12-2014 | CN | 104321912 A | 28-01-2015 |
| | | | EP | 2863457 A1 | 22-04-2015 |
| | | | JP | 5997383 B2 | 28-09-2016 |
| | | | JP | 2015524992 A | 27-08-2015 |
| | | | KR | 20140138079 A | 03-12-2014 |
| | | | US | 2014363736 A1 | 11-12-2014 |
| | | | WO | 2014189329 A1 | 27-11-2014 |
| US 2014050985 | A1 | 20-02-2014 | KR | 20140024587 A | 03-03-2014 |
| | | | US | 2014050985 A1 | 20-02-2014 |
| WO 2012014998 | A1 | 02-02-2012 | CN | 103038928 A | 10-04-2013 |
| | | | JP | WO2012014998 A1 | 12-09-2013 |
| | | | KR | 20130033425 A | 03-04-2013 |
| | | | WO | 2012014998 A1 | 02-02-2012 |
| KR 20140032834 | A | 17-03-2014 | NONE | | |
| EP 3859827 | A1 | 04-08-2021 | CN | 113228341 A | 06-08-2021 |
| | | | EP | 3859827 A1 | 04-08-2021 |
| | | | ES | 2926653 T3 | 27-10-2022 |
| | | | JP | 7222147 B2 | 14-02-2023 |
| | | | JP | 2022540521 A | 15-09-2022 |
| | | | KR | 20220064389 A | 18-05-2022 |
| | | | US | 2021336244 A1 | 28-10-2021 |
| | | | WO | 2021109133 A1 | 10-06-2021 |
| EP 4075538 | A1 | 19-10-2022 | CN | 114982002 A | 30-08-2022 |
| | | | EP | 4075538 A1 | 19-10-2022 |
| | | | EP | 4407714 A2 | 31-07-2024 |
| | | | US | 2023016240 A1 | 19-01-2023 |
| | | | WO | 2022041259 A1 | 03-03-2022 |

EPO FORM P0459

For more details about this annex : see Official Journal of the European Patent Office, No. 12/82